# EUROPEAN PATENT APPLICATION

(11) **EP 3 050 757 A1**
(43) Date of publication of application: **03.08.2016**
(21) Application number: 16000034.5
(22) Date of filing: 11.01.2016
(51) Int. Cl.: B60R 16/02, H02G 3/04

(54) **PROTECTOR AND BUSBAR MODULE AND ASSEMBLING/PRODUCING METHODS THEREFOR**

(30) Priority: 30.01.2015 JP 2015016430
(71) Applicant: Sumitomo Wiring Systems, Ltd., Yokkaichi City Mie 510 (JP)
(72) Inventor: Fujita, Tetsuya, Yokkaichi-City, MIE, 510-8503 (JP); Arai, Kaho, Yokkaichi-City, MIE, 510-8503 (JP)
(74) Representative: Müller-Boré & Partner Patentanwälte PartG mbB

(57) **Abstract**

It is aimed to provide a technology capable of suppressing the lift of a lid portion relative to a main body portion.

A protector 20 includes a main body portion 22 shaped along an extending direction of a member to be protected and a lid portion 40 capable of surrounding the member to be protected by virtue of first hinge 38 together with the main body portion 22. Further, the protector 20 includes a pressing piece 46 including a second hinge 48 having one end connected to an outward facing surface of the lid portion 40 and a projecting piece 50 connected to the other end of the second hinge 48, the lid portion 40 and the projecting piece 50 being biased in opening directions by their respective hinges 38 and 48, a lock recieving portion 30 provided on the main body portion 22, and a locking portion 52 provided on the projecting piece 50 and lockable with lock recieving portion 30 and where the projecting piece 50 is held close to the outward facing surface of the lid portion 40., due to the geometrical design of the lid portion and the projection pieces in cooperation with the biased hinges.

## Description

The present invention relates to a protector for protecting a member to be protected, to a busbar module, to a method of assembling a protector and to a production method for a busbar module.

A protector for protecting a wiring harness is disclosed, for example, in Japanese Unexamined Patent Publication No. 2005-318740 or Japanese Unexamined Patent Publication No. 2004-357415.

Protectors described in Japanese Unexamined Patent Publication No. 2005-318740 and Japanese Unexamined Patent Publication No. 2004-357415 are so configured that a main body portion and a lid portion are connected by a hinge and a lock portion (lock claw) and a locked portion (lock frame) are locked on a side opposite to the hinge.

However, depending on the protector, the main body portion and the lid portion may not be connected on an opposite side facing the lock portion across an accommodation space and the lock portion may not be provided. In this case, on the side opposite to the lock portion, the lid portion may be lifted relative to the main body portion and a member to be accommodated may be caught between the main body portion and the lid portion or an external matter may enter the accommodation space.

Accordingly, the present invention aims to provide a technology capable of suppressing the lift of a lid portion relative to a main body portion.

This object is solved according to the invention by the features of the independent claims. Particular embodiments of the invention are subject of the dependent claims.

According to one aspect of the invention, there is provided a protector, comprising: a main body portion shaped substantially along an extending direction of a member to be protected; a lid portion capable of at least partly surrounding the member to be protected together with the main body portion; at least one pressing piece including a first hinge having one end connected to the lid portion and a projecting piece connected to the other end of the first hinge, the lid portion and the projecting piece being biased in opening directions by the first hinge; at least one lock portion provided on the main body portion; and at least one locked portion provided on the projecting piece and lockable to the lock portion with the projecting piece held close to the lid portion.

According to a particular embodiment, the one end of the first hinge is connected to an outward facing surface of the lid portion.

Particularly, the locked portion is lockable to the lock portion with the projecting piece held close to the outward facing surface of the lid portion.

According to a further embodiment, there is provided a protector according to a first aspect includes a main body portion shaped along an extending direction of a member to be protected, a lid portion capable of surrounding the member to be protected together with the main body portion, a pressing piece including a first hinge having one end connected to an outward facing surface of the lid portion and a projecting piece connected to the other end of the first hinge, the lid portion and the projecting piece being biased in opening directions by the first hinge, a lock portion provided on the main body portion, and a locked portion provided on the projecting piece and lockable to the lock portion with the projecting piece held close to the outward facing surface of the lid portion.

Further particularly, the main body portion and the lid portion are connected via a second hinge at a position distant from the lock portion along an extending direction of the main body portion.

Further particularly, the lock portion and the locked portion are locked between the first and second hinges along the extending direction of the main body portion.

Further particularly, an extending direction of the first hinge and that of the second hinge are set to be substantially parallel.

Further particularly, a busbar at least partly is accommodated as the member to be protected.

According to a further aspect, there is provided a busbar module which includes a protector according to the above aspect or a particular embodiment thereof and a busbar at least partly accommodated in the protector.

According to a further aspect, there is provided a method of assembling a protector to a member to be protected, comprising the following steps: shaping a main body portion substantially along an extending direction of a member to be protected; providing a lid portion capable of at least partly surrounding the member to be protected together with the main body portion; arranging at least one pressing piece including a first hinge having one end connected to the lid portion and a projecting piece connected to the other end of the first hinge, whereby the lid portion and the projecting piece are biased in opening directions by the first hinge; and locking at least one lock portion provided on the main body portion to at least one locked portion provided on the projecting piece with the projecting piece held close to the lid portion.

According to a particular embodiment, the one end of the first hinge is connected to an outward facing surface of the lid portion, and/or wherein the locked portion is lockable to the lock portion with the projecting piece held close to the outward facing surface of the lid portion.

Particularly, the main body portion and the lid portion are connected via a second hinge at a position distant from the lock portion along an extending direction of the main body portion.

Further particularly, locking of the lock portion and the locked portion is achieved between the first and second hinges along the extending direction of the main body portion.

Further particularly, the method further comprises setting an extending direction of the first hinge and that of the second hinge to be substantially parallel.

Further particularly, a busbar at least partly is accommodated as the member to be protected.

According to a further aspect, there is provided a method of producing a busbar module, comprising: providing a busbar to be protected by a protector; and assembling the protector to the busbar as the member to be protected following the steps of a method the above aspect or a particular embodiment thereof.

According to the above, the protector particularly includes the main body portion shaped along the extending direction of the member to be protected, the lid portion capable of surrounding the member to be protected together with the main body portion, the pressing piece including the first hinge having the one end connected to the outward facing surface of the lid portion and the projecting piece connected to the other end of the first hinge, the lid portion and the projecting piece being biased in the opening directions by the first hinge, the lock portion provided on the main body portion and the locked portion provided on the projecting piece and lockable to the lock portion with the projecting piece held close to the outward facing surface of the lid portion. Thus, the lift of the lid portion relative to the main body portion can be suppressed by the action of a reaction force caused by the resilient deformation of the pressing piece in a direction to press the lid portion.

Particularly, the main body portion and the lid portion are connected via the second hinge at the position distant from the lock portion along the extending direction of the main body portion. Thus, the lid portion is easily lifted relative to the main body portion. Even in this case, the lift of the lid portion relative to the main body portion can be suppressed since the reaction force caused by the resilient deformation of the pressing piece acts in the direction to press the lid portion.

Further particularly, the lock portion and the locked portion are locked between the first and second hinges along the extending direction of the main body portion. Thus, the reaction force caused by the resilient deformation of the pressing piece acts on a side more distant from the second hinge along the extending direction of the lid portion, wherefore the lift of the lid portion relative to the main body portion can be more reliably suppressed.

Further particularly, the extending direction of the first hinge and that of the second hinge are set to be parallel. Thus, the reaction force of the second hinge is easily cancelled out by that of the first hinge. This enables the lift of the lid portion relative to the main body portion to be more reliably suppressed.

Further particularly, the busbar is accommodated as the member to be protected. Thus, a possibility of a short circuit caused by the entrance of an external matter or the like through a clearance formed by the lift can be suppressed by suppressing the lift of the lid portion relative to the main body portion.

Furthermore, in the busbar module particularly includes the protector with the main body portion shaped along the extending direction of the member to be protected, the lid portion capable of surrounding the member to be protected together with the main body portion, the pressing piece provided on the outward facing surface of the lid portion via the first hinge and resiliently deformable to be able to approach the outward facing surface of the lid portion, the lock portion provided on the main body portion and the locked portion provided on the projecting piece and lockable to the lock portion with the pressing piece held close to the outward facing surface of the lid portion. Thus, the lift of the lid portion relative to the main body portion can be suppressed by the action of a reaction force caused by the resilient deformation of the pressing piece in the direction to press the lid portion. This can suppress a possibility of a short circuit caused by the entrance of an external matter or the like through the clearance formed by the lift even if the busbar is accommodated.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view showing a protector according to an embodiment,
FIG. 2 is a front view showing the protector according to the embodiment,
FIG. 3 is a perspective view showing a state where a lid portion of the protector is closed,
FIG. 4 is a front view showing the state where the lid portion of the protector is closed,
FIG. 5 is a perspective view showing a state where the protector is locked,
FIG. 6 is a front view showing the state where the protector is locked,
FIG. 7 is a rear view showing the state where the protector is locked,
FIG. 8 is a bottom view showing the state where the protector is locked, and
FIG. 9 is a section along IX-IX of FIG. 8.

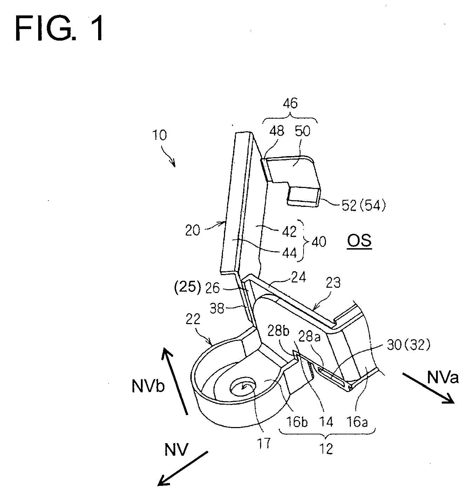

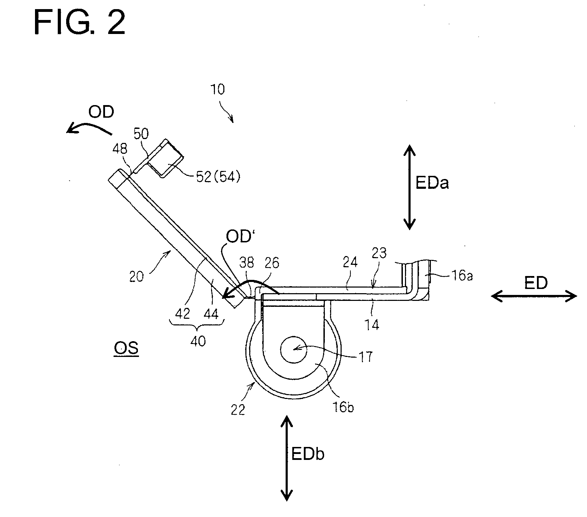

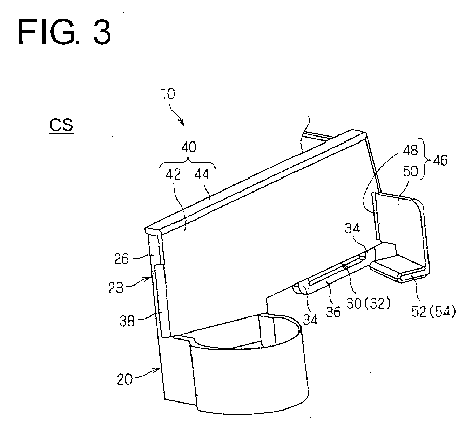

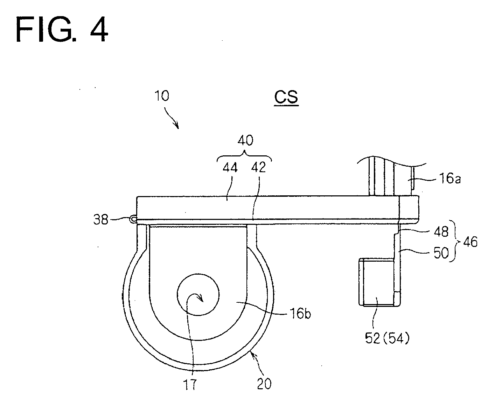

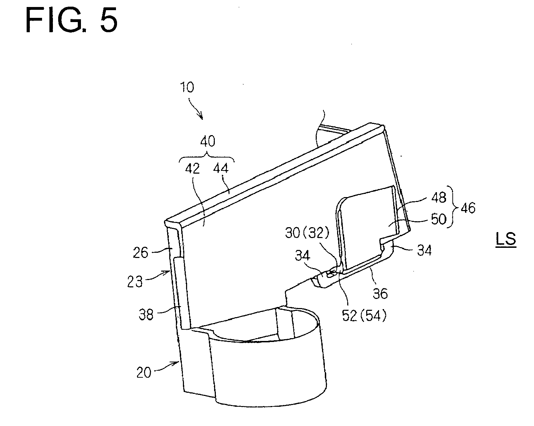

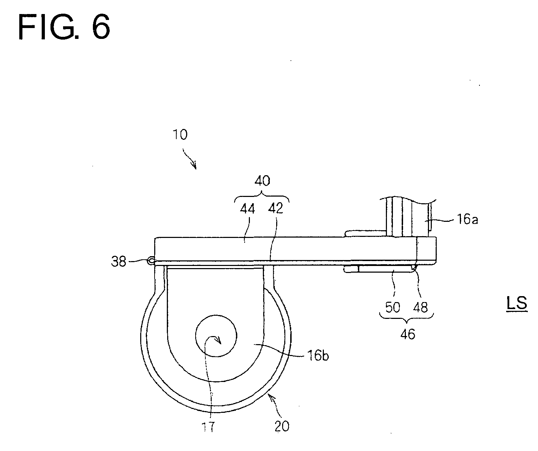

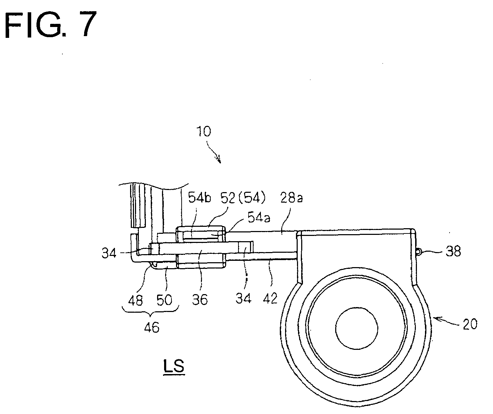

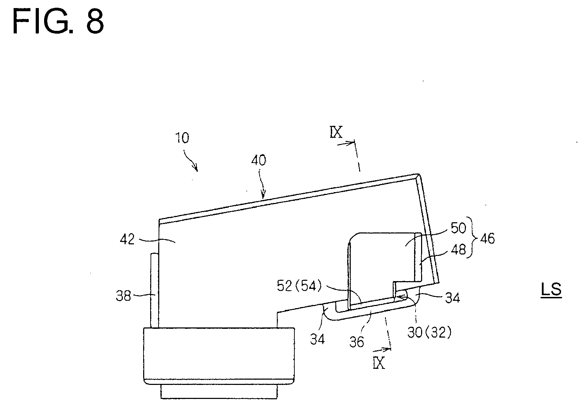

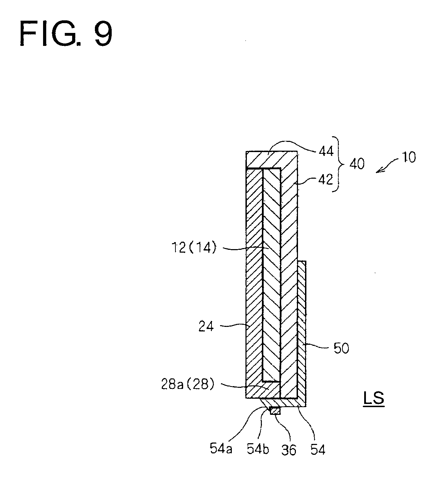

Hereinafter, a protector 20 according to a particular embodiment is described. FIGS. 1 to 9 are views showing the protector 20 according to the embodiment. FIGS. 1 and 2 are views showing a state where a lid portion 40 of the protector 20 is open (opened state OS), FIGS. 3 and 4 are views showing a state where the lid portion 40 of the protector 20 is closed (closed state CS), and FIGS. 5 to 9 are views showing a state where the protector 20 is locked (locked state LS). Note that FIGS. 1, 3 and 5 are perspective views and FIGS. 2, 4 and 6 are front views. Further, FIG. 7 is a rear view and FIG. 8 is a bottom view. Further, FIG. 9 is a section along IX-IX of FIG. 8. Note that FIGS. 3 and 5 are perspective views viewed from the same direction, and FIG. 1 is a perspective view viewed from a direction different from that of the FIGS. 3 and 5.

The protector 20 according to the particular embodiment is a member for surrounding and protecting a member to be protected. Here, specifically a busbar 12 is adopted as the member to be protected. By at least partly accommodating the busbar 12 into the protector 20, a busbar module 10 is formed.

Here, the busbar 12 to be protected by the protector 20 is described first.

The busbar 12 is a conductive member, for example, made of metal such as copper and plating such as tin playing may be applied to an outer layer of the busbar 12. The busbar 12 specifically is laid as a part of a power transmission path to an electric drive device such as a motor.

Here, the busbar 12 is formed by bending, folding and/or embossing a long flat plate member into a three-dimensional shape. Specifically, the busbar 12 is composed of an intermediate portion 14 and terminal portions 16a, 16b on or near opposite end parts of the intermediate portion 14. The terminal portions 16a, 16b on the end parts and the intermediate portion 14 are so bent that principal surfaces of the terminal portions 16a, 16b and that of the intermediate portion 14 are arranged at an angle different from 0° or 180°, preferably substantially orthogonal along lines orthogonal to extending directions of the terminal portions 16a, 16b. In other words, extension directions EDa, EDb of the terminal portions 16a, 16b are arranged at an angle different from 0° or 180°, preferably substantially perpendicular to an extension direction ED of the intermediate portion 14. The same holds true for a normal vector NV of the intermediate portion 14 being arranged at an angle different from 0° or 180°, preferably substantially perpendicular to a normal vector NVa of the terminal portion 16a and/or to a normal vector NVb of the terminal portion 16b. Further, the intermediate portion 14 is bent in the same plane (or along one or more lines lying in the same plane as the intermediate portion 14). Note that the terminal portion 16a on or near one end part and the intermediate portion 14 are bent with one principal surface of the busbar 12 located at an inner side and/or the terminal portion 16b on or near the other end part and the intermediate portion 14 are bent with the other principal surface of the busbar 12 at an inner side. In other words, the terminal portions 16a and 16b are bent towards substantially opposite sides of the intermediate portion 14.

The terminal portion(s) 16a, 16b of the busbar 12 is/are provided with at least one through hole 17. Using these through holes 17, the busbar 12 is or can be connected to an object to be connected, for example, as follows. Specifically, one or more threaded electrodes at least partly are inserted through the through holes 17 and one or more nuts are mounted on the electrode(s) inserted through the through hole(s) 17, whereby the busbar 12 is electrically connected to the electrode(s).

Referring back to the protector 20, the overall configuration of the protector 20 is first described. The protector 20 includes a main body portion 22, the lid portion 40, a pressing piece 46, a lock portion 30 and/or a locked portion 52. It particularly is assumed that the protector 20 described here is integrally or unitarily molded from a material such as resin using a mold.

The main body portion 22 is shaped along an extending direction ED of the member to be protected (e.g. of the busbar 12, particularly of the intermediate portion 14). Here, a bottom surface 24 of the main body portion 22 is formed substantially along an extending direction ED of the busbar 12 and in contact with the one principal surface of the busbar 12.

The lid portion 40 is formed to be able to at least partly surround the member to be protected together with the main body portion 22. Here, the lid portion 40 specifically is provided to be able to at least partly surround the intermediate portion 14 of the busbar 12.

The pressing piece 46 particularly includes a first hinge 48 and a projecting piece 50. The pressing piece 46 is provided to project from (particularly an outward facing surface of) the lid portion 40.

One end of the first hinge 48 is connected to (particularly the outward facing surface of) the lid portion 40. The first hinge 48 is a part made more easily bendable than a surrounding part (here, projecting piece 50 or lid portion 40). The lid portion 40 and the projecting piece 50 particularly are biased in opening directions OD by the first hinge 48 or in a direction increasing the azimutahl direction of the projecting piece 50 from the locked portion 52.

The projecting piece 50 is connected to the other end of the first hinge 48. When the projecting piece 50 approaches the lid portion 40 against a biasing force of the first hinge 48 (or in a direction opposite to the opening direction OD), the first hinge 48 is resiliently deformed.

The lock portion 30 is provided on the main body portion 22. Here, a lock recess or hole 32 particularly is adopted as the lock portion 30.

The locked portion 52 is provided on the projecting piece 50. The locked portion 52 is formed to be lockable to the lock portion 30 with the projecting piece 50 held substantially close to the outward facing surface of the lid portion 40. The pressing piece 46 is resiliently deformed against the biasing force with the locked portion 52 locked to the lock portion 30, whereby the lid portion 40 is pressed toward the main body portion 22 by the pressing piece 46 and particularly a lift between the lid portion 40 and the main body portion 22 is suppressed. Here, a lock claw 54 particularly is adopted as the locked portion 52.

Next, each part of the protector 20 is described in detail.

If a part of the main body portion 22 covering the intermediate portion 14 of the busbar 12 is an intermediate main body portion 23, the bottom surface 24 of the intermediate main body portion 23 is bent in the same plane to extend along the intermediate portion 14 of the busbar 12. A side wall portion 25 stands on or projects from the bottom surface 24 of the intermediate main body portion 23 in such a manner as to at least partly cover a part of an outer side surface (particularly including an outer peripheral side of a bent part of a side surface) of the intermediate portion 14 of the busbar 12 and/or an inner side surface particularly including an inner peripheral side of the bent part. Hereinafter, a part of the side wall portion 25 of the main body portion 22 at least partly covering the outer side surface of the busbar 12 is referred to as an outer side wall portion 26 and a part thereof covering the inner side surface of the busbar 12 is referred to as an inner side wall portion 28. Specifically, a part of the inner side wall portion 28 extending from the terminal portion 16a of the busbar 12 is referred to as a first inner side wall portion 28a and/or a part thereof extending from an end part of the first inner side wall portion 28a toward the terminal portion 16b of the busbar 12 to intersect with the first inner side wall portion 28a is referred to as a second inner side wall portion 28b. The outer side wall portion 26 particularly is not provided on a side opposite to the first inner side wall portion 28a and/or the outer side wall portion 26 particularly is provided substantially in parallel to the second inner side wall portion 28b on a side opposite to the second inner side wall portion 28b.

Further, the lid portion 40 includes a ceiling plate portion 42 at least partly covering the other principal surface of the intermediate portion 14 of the busbar 12 and/or a side wall portion 44 at least partly covering an outer side surface of the intermediate portion 14 of the busbar 12 from a part of the main body portion 22 where the outer side wall portion 26 is not provided. The side wall portion 44 particularly substantially extends in parallel to the first inner side wall portion 28a with the lid portion 40 closed.

Here, the main body portion 22 and the lid portion 40 particularly are connected via a second hinge 38. Specifically, one end of the second hinge 38 is connected to an outward facing surface of (particularly the tip of) the outer side wall portion 26 of the main body portion 22 and/or the other end of the second hinge 38 is connected to (particularly the ceiling plate portion 42 of) the lid portion 40. An extending direction (direction orthogonal to a direction connecting the main body portion 22 and the lid portion 40) of the second hinge 38 particularly substantially is parallel to that of the outer side wall portion 26. The second hinge 38 is made more easily bendable than surrounding members (here, lid portion 40 and main body portion 22), for example, by being formed to be thinner than the surrounding members.

Further, the main body portion 22 and the lid portion 40 particularly are connected at a position distant from the lock portion 30 substantially along an extending direction of the main body portion 22 here. Specifically, the main body portion 22 and the lid portion 40 are connected by the second hinge 38 provided on the outer side wall portion 26 of the main body portion 22 as described above here. Further, the lock portion 30 is provided on the first inner side wall portion 28a. By these, the main body portion 22 and the lid portion 40 are connected at the position distant from the lock portion 30 along the extending direction of the main body portion 22.

Furthermore, the lock portion 30 and the locked portion 52 particularly are locked between the first and second hinges 48, 38 substantially along the extending direction of the main body portion 22. Further, an extending direction of the first hinge 48 and that of the second hinge 38 are set to be parallel.

Specifically, the first hinge 48 is provided at a position near the terminal portion 16a on or near (particularly an outward facing surface of) the ceiling plate portion 42. The extending direction of the first hinge 48 (direction orthogonal to a direction connecting the ceiling plate portion 42 and the projecting piece 50 on a surface of the ceiling plate portion 42) particularly substantially is parallel to a part of the outer edge of the ceiling plate portion 42 substantially facing and/or extending along the outer side wall portion 26 of the main body portion 22. Thus, the extending direction of the first hinge 48 and that of the second hinge 38 particularly substantially are parallel.

The first hinge 48 is made more easily bendable than surrounding members (here, projecting piece 50 and lid portion 40), for example, by being formed to be thinner than the surrounding members. If the first hinge 48 is formed to be thin, the first hinge 48 can bias the projecting piece 50 and the lid portion 40 in opening directions by integrally or unitarily molding the pressing piece 46 and the lid portion 40 with the projecting piece 50 and the lid portion 40 in an open state.

Here, the projecting piece 50 particularly substantially is in the form of a flat plate and/or one principal surface thereof is to be held substantially in contact with and/or substantially faces the outward facing surface of the ceiling plate portion 42 with the lock portion 30 and/or the locked portion 52 locked to each other. At this time, the projecting piece 50 is tilted in a direction toward the second hinge 38. In this way, the lid portion 40 is closed and the projecting piece 50 is tilted toward the lid portion 40, whereby the locked portion 52 provided on the tip of the projecting piece 50 is or can be locked to the lock portion 30 between the first and second hinges 48, 38.

Note that although the projecting piece 50 is formed into a substantially L shape here, this is because the ceiling plate portion 42 particularly is bent at an obtuse angle in the same plane and the extending direction of the first hinge 48 and that of the second hinge 38 particularly are substantially parallel and/or because of the position of the lock portion 30 and the like. The shape of the projecting piece 50 is not limited to the aforementioned one. The shape of the projecting piece 50 may be appropriately set if the locked portion 52 provided on the projecting piece 50 is lockable to the lock portion 30 provided on the main body portion 22.

Specific shapes of the lock portion 30 and the locked portion 52 are described here. The lock claw 54 particularly is adopted as the locked portion 52 and the lock recess 32, into which the lock claw 54 at least partly is fittable, particularly is adopted as the lock portion 30 here.

Specifically, the lock claw 54 constituting or forming part of the locked portion 52 particularly is provided to project from (particularly a side edge part of) the projecting piece 50 at an angle different from 0° or 180°, preferably substantially orthogonally to the principal surface of the projecting piece 50. More specifically, the lock claw 54 is provided to project on the principal surface of the projecting piece 50 facing the outward facing surface of the ceiling plate portion 42 when the projecting piece 50 is tilted in the direction toward the second hinge 38. Further, a thick portion 54a gradually thickened from a tip side toward a base end side of the lock claw 54 particularly is provided on or near a tip part of the lock claw 54. Further, a step portion 54b particularly is created on or near a base end edge part of the thick portion 54a.

The lock portion 30 includes one or more, particularly a pair of first frame body pieces 34 projecting on the first inner side wall portion 28a of the main body portion 22 near the terminal portion 16a while being spaced apart in the extending direction of the main body portion 22 (particularly corresponding to the extending direction ED of the intermediate portion 14) and/or a second frame body piece 36 connecting (particularly the tips or distal portions of) the pair of first frame body pieces. In this way, a space enclosed by the first inner side wall portion 28a of the main body portion 22, the pair of first frame body pieces 34 and the second frame body piece 36 particularly serves as the lock recess or hole 32.

A distance between the inner surfaces of the pair of first frame body pieces 34 particularly is set substantially equal to or longer than a width of the lock claw 54. Here, since the projecting piece 50 and the locked portion 52 rotate about the first hinge 48 when the lock portion 30 and the locked portion 52 are locked, the distance between the inner surfaces of the first frame body pieces 34 particularly is set longer than the width of the lock claw 54 so that the projecting piece 50 and the locked portion 52 are lockable while rotating or pivoting.

Further, a distance between the outer surface of the first inner side wall portion 28a of the main body portion 22 and the inner surface of the second frame body piece 36 particularly is set shorter than a thickness of a thickest part of the thick portion 54a of the lock claw 54.

Note that the protector 20 particularly is produced by being integrally or unitarily molded from the material such as resin using the mold as described above here. This causes various restrictions on the shape of the protector 20. For example, the lid portion 40 and the main body portion 22 particularly are biased in opening directions OD' by the second hinge 38. Thus, the main body portion 22 and the lid portion 40 are easily lifted. This particularly is due to integral or unitary molding with the main body portion 22 and the lid portion 40 in an open state and the like. Further, the outer side wall portion 26 particularly is not provided on the side of the main body portion 22 substantially opposite to the first inner side wall portion 28a. Thus, it is difficult to adopt a lock structure or a hinge structure on the side opposite to the lock portion 30. This particularly is because of the presence of another part of the mold on the side opposite to the lock portion 30 and the like. The restrictions as described above are caused mainly to facilitate the removal of the mold.

### <Operation>

Next, a locking operation of the lock portion 30 (here, lock recess 32) and the locked portion 52 (here, lock claw 54) is described.

To lock the lock claw 54 and the lock recess 32, the lid portion 40 is first closed to approach the main body portion 22 and the projecting piece 50 is brought closer to the lid portion 40. This causes the lock claw 54 to be gradually inserted into the lock recess 32.

As the lock claw 54 at least partly is inserted into the lock recess 32, the thick portion 54a of the lock claw 54 particularly is caught by an inner peripheral edge part of the lock recess 32. If a force is further applied in this state, the lock claw 54 is resiliently deformed particularly to slightly thin the thick portion 54a of the lock claw 54 and/or at least one of the first inner side wall portion 28a and the second frame body pieces 36 is resiliently deformed to widen the distance between the outer surface of the first inner side wall portion 28a of the main body portion 22 and the inner surface of the second frame body piece 36, whereby the thick portion 54a of the lock claw 54 at least partly is inserted into the lock recess 32. When the thick portion 54a of the lock claw 54 passes over the lock recess 32, the resilient deformation thereof particularly is alleviated and the step portion 54b of the lock claw 54 is caught by the bottom surface 24 of the second frame body piece 36 and the lid portion 40 and the main body portion 22 are locked.

The lid portion 40 and the main body portion 22 particularly are locked by the lock portion 30 and the locked portion 52 at the position of the first inner side wall portion 28a. Thus, the lid portion 40 is difficult to lift relative to the main body portion 22. Further, since the lid portion 40 and the main body portion 22 are connected via the second hinge 38 at the position of the outer side wall portion 26, the lid portion 40 is difficult to lift relative to the main body portion 22 due to a reaction force of the second hinge 38 biasing the lid portion 40 in the opening direction OD'. However, since the lid portion 40 and the main body portion 22 particularly are neither locked nor connected on the side opposite to the first inner side wall portion 28a, they are easily lifted. To make these parts difficult to lift, the lid portion 40 is provided with the pressing piece 46.

Specifically, when the lock claw 54 at least partly is inserted into the lock recess 32, the projecting piece 50 is tilted toward the ceiling plate portion 42 of the lid portion 40 while being rotated or pivoted about the first hinge 48 to approach the second hinge 38 (in a direction substantially opposite to the opening direction OD). At this time, the first hinge 48 is resiliently deformed by being bent. The first hinge 48 particularly is maintained in a resiliently deformed state with the lock claw 54 and the lock recess 32 locked. Thus, a reaction force caused by the resilient deformation of the first hinge 48 is applied to the ceiling plate portion 42 of the lid portion 40 with the lock claw 54 and the lock recess 32 locked. This reaction force acts in a direction to press the ceiling plate portion 42, whereby the lift of the lid portion 40 relative to the main body portion 22 can be suppressed.

At this time, if the main body portion 22 and the lid portion 40 are connected via the second hinge 38 at a position distant from the lock portion 30 along the extending direction of the main body portion 22, the lid portion 40 is easily lifted relative to the main body portion 22 by the reaction force of the second hinge 38.

Particularly, if the lock portion 30 and the locked portion 52 particularly are locked between the first and the second hinges 48, 38 along the extending direction of the main body portion 22, a reaction force caused by the resilient deformation of the pressing piece 46 acts on a side more distant from the second hinge 38 along the extending direction of the lid portion 40 from the first hinge 48 to the second hinge 38, wherefore the lift of the lid portion 40 relative to the main body portion 22 can be more reliably suppressed.

Further, if the extending direction of the first hinge 48 and that of the second hinge 38 particularly are set to be substantially parallel, a reaction force of the second hinge 38 is easily canceled out by that of the first hinge 48. This enables the lift of the lid portion 40 relative to the main body portion 22 to be more reliably suppressed.

The protector 20 according to the embodiment includes the main body portion 22 shaped along the extending direction of the member (e.g. the extending direction ED of the intermediate portion 14) to be protected, the lid portion 40 capable of at least partly surrounding the member to be protected together with the main body portion 22, the pressing piece 46 including the first hinge 48 having the one end connected to the outward facing surface of the lid portion 40 and the projecting piece 50 connected to the other end of the first hinge 48, the lid portion 40 and the projecting piece 50 particularly being biased in the opening directions OD by the first hinge 48, the lock portion 30 provided on the main body portion 22 and the locked portion 52 provided on the projecting piece 50 and lockable to the lock portion 30 with the projecting piece 50 held close to the outward facing surface of the lid portion 40. Thus, the lift of the lid portion 40 relative to the main body portion 22 can be suppressed by the action of a reaction force caused by the resilient deformation of the pressing piece 46 in a direction to press the lid portion 40.

Further, since the main body portion 22 and the lid portion 40 particularly are connected via the second hinge 38 at the position distant from the lock portion 30 along the extending direction of the main body portion 22, the lid portion 40 is easily lifted relative to the main body portion 22. Even in this case, the lift of the lid portion 40 relative to the main body portion 22 can be suppressed since the reaction force caused by the resilient deformation of the pressing piece 46 acts in the direction to press the lid portion 40.

Further, since the lock portion 30 and the locked portion 52 particularly are locked between the first and second hinges 48, 38 along the extending direction of the main body portion 22, a reaction force caused by the resilient deformation of the pressing piece 46 acts on the side more distant from the second hinge 38 along the extending direction of the lid portion 40, wherefore the lift of the lid portion 40 relative to the main body portion 22 can be more reliably suppressed.

Further, since the extending direction of the first hinge 48 and that of the second hinge 38 particularly are set to be substantially parallel, the reaction force of the second hinge 38 is easily cancelled out by that of the first hinge 48. This enables the lift of the lid portion 40 relative to the main body portion 22 to be more reliably suppressed.

Further, since the busbar 12 particularly is accommodated as the member to be protected, a possibility of a short circuit caused by the entrance of an external matter or the like through a clearance formed by the lift can be suppressed by suppressing the lift of the lid portion 40 relative to the main body portion 22.

Accordingly, to provide a technology capable of suppressing the lift of a lid portion relative to a main body portion, a protector 20 includes a main body portion 22 substantially shaped along an extending direction of a member to be protected (such as a busbar 12) and a lid portion 40 capable of at least partly surrounding the member to be protected together with the main body portion 22. Further, the protector 20 includes at least one pressing piece 46 including at least one first hinge 48 having one end connected to (particularly an outward facing surface of) the lid portion 40 and a projecting piece 50 connected to the other end of the first hinge 48, the lid portion 40 and the projecting piece 50 particularly being biased in opening directions OD by the first hinge 48, at least one lock portion 30 provided on the main body portion 22, and at least one (particularly corresponding) locked portion 52 provided on the projecting piece 50 and lockable to the lock portion 30 with the projecting piece 50 held close to (particularly the outward facing surface of) the lid portion 40.

### [Modifications]

Although the outer side wall portion particularly is not provided on the side of the main body portion substantially opposite to the first inner side wall portion 28a across the accommodation space for the busbar 12 in the embodiment, an outer side wall portion may be also provided on the side substantially opposite to the first inner side wall portion 28a. In this case, a lock portion, a second hinge or the like may be also provided on the outer side wall portion provided on the side opposite to the first inner side wall portion 28a.

Further, although the lock portion 30 particularly is provided between the first and second hinges 48, 38 with the lid portion 40 closed, it is also considered to form the first hinge on a side closer to the second hinge than the lock portion. In this case, the projecting piece is tilted in a direction away from the second hinge to lock the lock portion and the locked portion.

Further, although the extending direction of the first hinge 48 and that of the second hinge 38 particularly substantially are set to be parallel with the lid portion 40 closed in the embodiment, the extending direction of the first hinge 48 and that of the second hinge 38 may not be parallel. For example, it is also considered to set the extending direction of the first hinge in a direction along the extending direction of the lid portion (extending direction of the intermediate portion of the busbar). In this case, the projecting piece is tilted toward the lock portion along a direction (width direction of the lid portion) orthogonal to the extending direction of the lid portion.

Further, although the protector 20 is integrally or unitarily molded from the resin or the like in the embodiment, this is not essential. The protector 20 may be formed by combining a plurality of separately formed members.

For example, the lid portion and the pressing piece may be separately formed. In this regard, the thin form of the first hinge 48 in the embodiment is not essential. Another configuration such as a springy hinge, i.e. a so-called spring hinge may be adopted as the first hinge. That is, the first hinge has only to be able to bias the projecting piece in the opening direction and resiliently deformable in a direction to close the projecting piece.

Further, for example, the lid portion and the main body portion may be separately formed without being connected. In this case, a lock portion and a locked portion may be provided at the position of the second hinge.

Further, although the lock recess 32 particularly is adopted as the lock portion 30 and the lock claw 54 is adopted as the locked portion 52 in the embodiment, this is not essential. For example, a lock claw may be adopted as the lock portion and a lock recess may be adopted as the locked portion.

Further, although the protector 20 particularly protects the busbar 12 in the embodiment, the object to be protected by the protector is not limited to the busbar. The object to be protected by the protector may be, for example, a wire, a wiring harness or the like.

Note that the respective configurations described in the above embodiment and each modification can be appropriately combined unless they contradict each other.

Although this invention has been described in detail above, the above description is illustrative in all aspects and this invention is not limited thereby. It should be understood that unillustrated numerous modifications can be made without departing from the scope of this invention.

### Reference Signs

- 10: busbar module
- 12: busbar (member to be protected)
- 20: protector
- 22: main body portion
- 30: lock portion
- 38: second hinge
- 40: lid portion
- 46: pressing piece
- 48: first hinge
- 50: projecting piece
- 52: locked portion

## Claims

1. A protector (20), comprising:
a main body portion (22) shaped substantially along an extending direction (ED) of a member (12) to be protected;
a lid portion (40) capable of at least partly surrounding the member (12) to be protected together with the main body portion (22);
at least one pressing piece (46) including a first hinge (48) having one end connected to the lid portion (40) and a projecting piece (50) connected to the other end of the first hinge (48), the lid portion (40) and the projecting piece (50) being biased in opening directions (OD) by the first hinge (48);
at least one lock portion (30) provided on the main body portion (22); and
at least one locked portion (52) provided on the projecting piece (50) and lockable to the lock portion (30) with the projecting piece (50) held close to the lid portion (40).

2. A protector according to claim 1, wherein the one end of the first hinge (48) is connected to an outward facing surface of the lid portion (40).

3. A protector according to any one of the preceding claims, wherein the locked portion (52) is lockable to the lock portion (30) with the projecting piece (50) held close to the outward facing surface of the lid portion (40).

4. A protector according to any one of the preceding claims, wherein the main body portion (22) and the lid portion (40) are connected via a second hinge (38) at a position distant from the lock portion (30) along an extending direction of the main body portion (22).

5. A protector according to claim 4, wherein the lock portion (30) and the locked portion (52) are locked between the first and second hinges (48, 38) along the extending direction of the main body portion (22).

6. A protector according to claim 4 or 5, wherein an extending direction of the first hinge (48) and that of the second hinge (38) are set to be substantially parallel.

7. A protector according to any one of the preceding claims, wherein a busbar (12) at least partly is accommodated as the member (12) to be protected.

8. A busbar module (10), comprising:
a protector (20) according to any one of the preceding claims; and
a busbar (12) to be at least partly accommodated in the protector (20).

9. A method of assembling a protector (20) to a member (12) to be protected, comprising the following steps:
shaping a main body portion (22) substantially along an extending direction (ED) of a member (12) to be protected;
providing a lid portion (40) capable of at least partly surrounding the member (12) to be protected together with the main body portion (22);
arranging at least one pressing piece (46) including a first hinge (48) having one end connected to the lid portion (40) and a projecting piece (50) connected to the other end of the first hinge (48), whereby the lid portion (40) and the projecting piece (50) are biased in opening directions (OD) by the first hinge (48); and
locking at least one lock portion (30) provided on the main body portion (22) to at least one locked portion (52) provided on the projecting piece (50) with the projecting piece (50) held close to the lid portion (40).

10. A method according to claim 9, wherein the one end of the first hinge (48) is connected to an outward facing surface of the lid portion (40), and/or wherein the locked portion (52) is lockable to the lock portion (30) with the projecting piece (50) held close to the outward facing surface of the lid portion (40).

11. A method according to claim 9 or 10, wherein the main body portion (22) and the lid portion (40) are connected via a second hinge (38) at a position distant from the lock portion (30) along an extending direction of the main body portion (22).

12. A method according to claim 11, wherein locking of the lock portion (30) and the locked portion (52) is achieved between the first and second hinges (48, 38) along the extending direction of the main body portion (22).

13. A method according to claim 11 or 12, further comprising setting an extending direction of the first hinge (48) and that of the second hinge (38) to be substantially parallel.

14. A method according to any one of the preceding claims 9 to 13, wherein a busbar (12) at least partly is accommodated as the member (12) to be protected.

15. A method of producing a busbar module (10), comprising:
providing a busbar (12) to be protected by a protector (20); and assembling the protector (20) to the busbar as the member (12) to be protected following the steps of a method any one of the preceding claims 9 to 14.
